(19) Europäisches Patentamt / European Patent Office / Office européen des brevets

(11) **EP 4 266 137 B1**

(12) **EUROPEAN PATENT SPECIFICATION**

(45) Date of publication and mention
of the grant of the patent:
**25.09.2024  Bulletin 2024/39**

(21) Application number: **22382369.1**

(22) Date of filing: **20.04.2022**

(51) International Patent Classification (IPC):
**G05B 19/418** $^{(2006.01)}$     **A22C 25/04** $^{(2006.01)}$
**B65B 25/06** $^{(2006.01)}$     **B65B 57/16** $^{(2006.01)}$
**B65B 59/00** $^{(2006.01)}$

(52) Cooperative Patent Classification (CPC):
**G05B 19/41875; A22C 25/04; B65B 25/061;
B65B 57/16; B65B 59/001; B65B 59/02;**
G05B 2219/32015; G05B 2219/32018

(54) **SYSTEM AND ADAPTIVE METHOD OF CANNING TUNA**

SYSTEM UND ADAPTIVES VERFAHREN ZUM EINDOSEN VON THUNFISCH

SYSTÈME ET PROCÉDÉ ADAPTATIF DE MISE EN CONSERVE DE THON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2023  Bulletin 2023/43**

(73) Proprietor: **Hermasa Canning Technology S.A.
36314 Vigo (ES)**

(72) Inventor: **RODRÍGUEZ CORDOVÉS, Pablo
36314 Vigo (ES)**

(74) Representative: **Clarke, Modet y Cía., S.L.
C/ Suero de Quiñones 34-36
28002 Madrid (ES)**

(56) References cited:
• **OMAR FARAG K ET AL: "Optimal portion control
of natural objects with application in automated
cannery processing of sh", JOURNAL OF FOOD
ENGINEERING, vol. 46, no. 1, 6 June 2000
(2000-06-06), pages 31 - 41, XP055967476,
Retrieved from the Internet
<URL:https://www.sciencedirect.com/science/ar
ticle/pii/S0260877400000686/pdfft?md5=482fd3c
8e2bd1563a8b53c8a0583b1c9&pid=1-s2.0-S026
0877400000686-main.pdf> DOI:
https://doi.org/10.1016/S0260-8774(00)00068-6**

• **DE SILVA C.W. ET AL: "Automation and
Optimization of the Can-Filling Process of Fish",
5TH IFAC SYMPOSIUM ON MODELLING AND
CONTROL IN BIOMEDICAL SYSTEMS 2003,
MELBOURNE, AUSTRALIA, 21-23 AUGUST 2003,
vol. 31, no. 20, 1 July 1998 (1998-07-01), pages
337 - 342, XP055967662, ISSN: 1474-6670,
Retrieved from the Internet
<URL:http://dx.doi.org/10.1016/S1474-6670(17)4
1817-9> DOI: 10.1016/S1474-6670(17)41817-9**

• **PITARCH J L ET AL: "Optimal operation of
thermal processing of canned tuna under product
variability", JOURNAL OF FOOD ENGINEERING,
ELSEVIER, AMSTERDAM, NL, vol. 304, 23 March
2021 (2021-03-23), XP086539306, ISSN:
0260-8774, [retrieved on 20210323], DOI:
10.1016/J.JFOODENG.2021.110594**

• **ORTIZ-BARRIOS MIGUEL ET AL: "Using
Statistical Experimental Design and RSM to
Improve the Canning Process: A Case Study in
the Fish Industry", INTERNATIONAL JOURNAL
OF CONTROL THEORY AND APPLICATIONS, vol.
9, no. 44, 31 December 2016 (2016-12-31), pages
151 - 159, XP093164535, ISSN: 0974-5572,
Retrieved from the Internet
<URL:https://www.researchgate.net/profile/Migu
el-Ortiz-Barrios/publication/317170310_Using_S
tatistical_Experimental_Design_and_RSM_to_I
mprove_the_Canning_Process_A_Case_Study_
in_the_Fish_Industry/links/5c7d5e32458515831f
83c628/Using-Statistical-Experimental-Design-a
nd-RSM-to-Improve-the-Canning-Process-A>**

## Description

### Technical Field

The invention belongs to the field of processing tuna and other pelagic species, specifically the processing and packaging or canning of these canned species.

### Background

In the industrial processing of tuna and other pelagic species, the use of canning equipment is widely used. There are different types of machines for packing or canning tuna and pelagic species, where operators manually feed the machine with blocks of tuna (in the form of loins, pieces and/or crumbs). Then the equipment compacts the blocks, cuts them into portions and inserts the portions into the cans, at production rates of between 200 and 500 cans per minute. In the state of the art there is a plurality of disclosures directed to equipment and machines related to canning fish and specifically canning tuna and pelagic species, among which is the patent document ES 2119608 B1 that teaches a movement system actuated by toothed wheels and a motor-reducer with a frequency converter.

On the other hand, patent document ES 2351318 B1 discloses a machine that uses blocks of tuna, automating the feeding of raw material to the canning machine.

Document EP2204324 A1 discloses a machine that generates tuna advance with a conveyor band, and with rotating compaction chambers, equipped with a load cell to measure the compaction force.

Documents Farag et al. ("Optimal portion control of natural objects with application in automated cannery processing of fish", Journal of Food Engineering, vol. 46, no. 1, 6 June 2000, pages 31-41) and De Silva et al. ("Automation and optimization of the can-filling process of fish", IFAC Proceedings, vol. 31, no. 20, 1 July 1998, pages 337-342) disclose an automated system for portioning and filling of salmon into cans by optimally grouping and cutting salmon to reduce wastage. Document Ortiz-Barrios Miguel et al: "Using Statistical Experimental Design and RSM to Improve the Canning Process: A Case Study in the Fish Industry",International Journal of Control Theory and Applications, vol. 9, no. 44, 31 December 2016, pages 151-159, XP093164535,ISSN: 0974-5572, discloses the application of statistical experimental design and response surface methodologies to define the optimal conditions for a tuna canning process and reduce the variability in net weight of the canned tuna.

Currently existing canning equipment and machines have the drawback that they do not have the ability to adapt the operating parameters of the machine precisely to the particular conditions of each production of the machine (e.g. raw material used, can format, covering liquid used, etc.), which may vary during the production itself, but instead follow an empirical trial and error operation, where an operator periodically adjusts machine parameters (e.g. change target fill weight) according to his experience. This subjective adjustment of the operating parameters of the machine is an inaccurate adjustment that produces variations in the drained weight of the cans, generating weights below what is defined, with the consequent rejection, or more usually, weight above what is defined to avoid non-compliance with the minimum requirements, with the consequent economic loss. In addition to the weights, the imprecise adjustment of the packing machine's operating parameters can also affect the quality of the canned product, and in particular the height (maximum, minimum and average) of the tuna cake in the can, characteristics that may affect the appearance of the product and that, in unbalanced conditions, can lead to product rejection.

In the state of the art, there is therefore, a need to implement a tuna canning system that has the ability to adjust the operating parameters of the machine objectively, precisely and adaptively to the particular and changing conditions of each production, with the aim of purpose of optimizing production.

### Summary

This invention refers to a system according to claim 1 and an adaptive method for canning tuna according to claim 11 that solves the problems of the state of the art previously listed, allowing to adjust the operating parameters of a tuna canning machine in a precise, adaptive and optimized way to the particular conditions for each production. By means of these adjustments it is possible to optimize the production; for example, the gain of the production process can be improved (i.e. percentage of weight obtained at the end of the process with respect to the weight of raw material that enters the packing machine), the precision in the filling weight of the cans and/or the quality or appearance of the product.

In one embodiment, the tuna canning machine comprises at least one sensor configured to measure one or more properties of the tuna during the canning process, such that the input parameters comprise said properties of the tuna. Advantageously, the system obtains optimal operating parameters of the tuna canning machine that adapt to the changing conditions of the raw material entering the packer during production. The variations produced in the properties of the input raw material can significantly affect the productivity of the machine, since these properties (such as humidity or temperature) influence the weight of the tuna and/or the compaction of the tuna performed by the machine before canning and weighing the can, thereby affecting the filling weight and the gain of the production line. Sudden changes and fluctuating situations in the properties of the tuna can produce significant deviations in the filling weights (thus increasing their standard deviation) that decrease the machine's productivity.

The tuna canning machine may comprise a temperature sensor configured to measure the temperature of the tuna during tuna canning. Preferably, the temperature sensor is located at the entrance of the packer, coming into contact with the blocks of tuna (e.g., a sensor located on the raw material conveyor band, and protruding or flush with the top edge of the band), to obtain continuous temperature measurements on the tuna as it enters the packer input conveyor.

Additionally, or alternatively, the tuna canning machine may comprise an NIR sensor configured to continuously measure one or more properties of the tuna, such as humidity, protein, fat and ash content of the tuna. To do this, this NIR sensor uses diode array technology, and is based on the analysis of the near infrared, through the spectroscopic technique that naturally uses the electromagnetic spectrum. Spectrometry is the measurement of the amount of energy an element absorbs as a function of wavelength. The NIR sensor is located, preferably also at the entrance of the packing machine, so that the near infrared light is directed at the tuna or raw material that enters the machine. The light is modified according to the composition of the tuna and the NIR sensor detects this modified light. The spectral modifications are converted into information on the composition of the tuna through specific calibrations for each type of product. It is a technique used in other sectors (meat, fruit and vegetable or dairy) that allows the detection of contaminants and foreign matter in food and that allows the measurement of various parameters such as humidity, fats, proteins, sugars, fiber, etc.

In this invention, the NIR sensor is configured to measure some parameters that have been identified as relevant for the performance of the tuna canning process, since they can directly affect the absorption and gain obtained at the end of the process, thus influencing the determination of the optimal adjustment of the operating parameters of the machine. Notably, the following parameters have been identified: humidity, fats, proteins, and ashes. The NIR sensor is preferably configured to measure any combination of these parameters (e.g., only humidity, humidity, and fats, etc.). Any commercial NIR sensor can be used, on which a specific calibration is performed to be used on tuna.

The use of the properties of the tuna measured, preferably continuously (with a short sampling time), by means of the NIR sensor or the temperature sensor during production allows the machine to be optimally adjusted, since it takes into account truly relevant properties that affect the productivity of the packer. In addition, this property is usually very changeable, since the tuna introduced into the machine does not always have to be the same (type of species, type of packaging, type of processing, fishing area, etc.) nor is it introduced into the packer under the same conditions of temperature or humidity, for example.

The tuna canning machine may comprise a vibration sensor, configured to detect vibrations in some part of the machine, which may be associated, according to a vibration pattern, with unwanted operations of the machine. Using information captured by the vibration sensor, the machine can be configured to obtain a vibration pattern that corresponds to what is obtained when the machine is at peak performance.

This invention advantageously allows the machine to be adjusted with the optimal parameters calculated according to the characteristics of each production, either at the beginning of it (e.g., once before starting production or just started) or dynamically over manufacturing time, to adapt continuously and repeatedly to changing production conditions, such as the temperature and humidity properties of tuna. Thus, when the packer control unit detects a change in any of the production input parameters, such as a significant alteration (e.g. above a certain threshold) in the temperature or humidity of the tuna, the control unit can send the new production input parameters to the optimization unit, including the parameter value (e.g., temperature, humidity, etc.) altered, so that it calculates the optimal operating parameters, and sends them to the control unit for application, so that the tuna canning machine can maintain an optimal productivity throughout the production process.

The invention makes it possible to obtain optimal packer settings calculated by the optimization module. Optimum operating parameters are preferably obtained through supervised machine learning that includes training using, at least partially, historical production data. For this, the data types of past productions acquired by the training tuna canning machines must be identical, or at least similar, to the data types that are acquired in the new production of the tuna canning machine. Thus, the input parameters of the new production must be a data type included, at least partially, in the production data history. Training tuna canning machines are preferably machines of the same type (model, manufacturer) as the tuna canning machine on which the new production is carried out, which can be part of the set of training tuna canning machines.

The settings calculated by the optimization module are optimal operating parameters that are applied to the tuna canning machine to optimize the new production. Depending on the established target function, one or another aspect of the production process will be improved. In one embodiment, the target function is based on maximizing the number of cans produced per mass unit of input tuna. The target function defined in this way improves the gain and accuracy of the filling weights, which directly influences the productivity of the line. Other objective functions can be used, such as maximizing gain, minimizing the standard deviation of fill weights, maximizing the quality of product appearance, or a combination of several factors applying a relevance factor (i.e., weights) to each of them.

The application of the optimal settings on the machine can be done manually by an operator and/or automatically by the packer's own control unit. For example, there may be a combination of manual and automatic adjustments, where for some machine adjustments may be necessary, due to their physical nature (e.g., change of nozzle used in the packer), manual change to be made, while other adjustments can be implemented automatically by the control unit (e.g., automatic change of target packing weight).

**Brief Description of the Drawings**

Next, a series of drawings that help to better understand the invention, and that are expressly related to an embodiment of said invention, which is presented as a non-limiting example of it, are very briefly described.

Figure 1 shows a block diagram of an adaptive tuna canning system according to an embodiment of this invention.

Figure 2 shows a flowchart of an adaptive tuna canning method according to an embodiment of this invention.

Figure 3 shows a block diagram of an adaptive tuna canning system according to a particular embodiment.

Figures 4A-4C show the relationship between different variables (standard deviation of filling weights, gain and the number of cans produced per mass unit of tuna) in order to establish a target function.

Figure 5 shows an example of historical data from past productions, used to optimize the operating parameters of the machine.

Figure 6 illustrates the use of an algorithm based on iterative searches to obtain the optimal machine settings.

Figures 7A-7B show obtaining optimal machine settings using an algorithm based on machine learning models.

Figure 8 shows a perspective view of a tuna canning machine.

Figure 9 shows a schematic view of a tuna canning machine.

Figure 10 represents a parameters list used in the adaptive tuna canning system, according to a possible realization.

**Detailed Description**

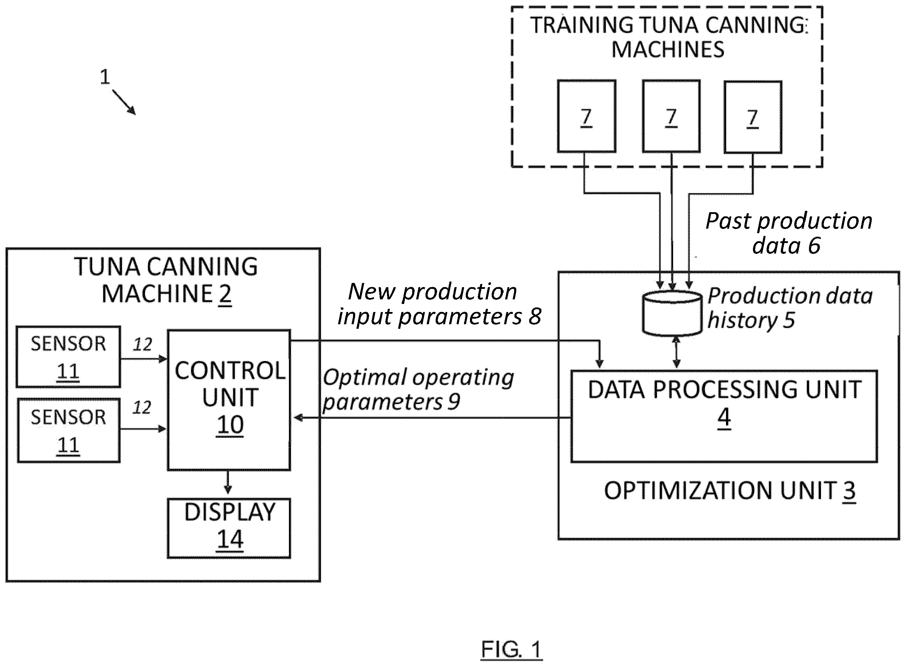

**Figure 1** illustrates an adaptive tuna canning system according to one embodiment of this invention. System 1 comprises a tuna canning machine 2, and an optimization unit 3.
The tuna canning machine 2 includes a control unit 10, implemented for example, by means of a computer in communication with a PLC, in charge of controlling the machine (including, e.g. controlling of parameters or configurable settings of the machine) during the tuna canning process of a production.
The optimization unit 3 comprises a data processing unit 4, which is configured to:

- Compiling a production data history 5 formed by a plurality of past production data 6 captured by at least one training tuna canning machine 7 during the tuna canning process in different past productions.
- Receiving input parameters 8 of a new production of tuna canning machine 2.
- Setting a target function 13 for the new production of tuna canning machine 2.
- Calculating, based on historical production data 5, optimal operating parameters 9 for new production by optimizing the target function 13.

Once the optimal operating parameters 9 have been obtained, the optimization unit 3 sends them to the tuna canning machine 2 for their application in the new production. The tuna canning machine 2 is configured, either automatically and/or manually, to execute the canning of tuna in the new production based on the optimal operating parameters 9 received.
The at least one training tuna canning machine 7 may include the tuna canning machine 2. Figure 1 shows several training tuna canning machines 7, which may be located in different locations, to obtain the production data history 5. System 1 could use a single training tuna canning machine 7. Furthermore, in one embodiment, the tuna canning machine 2 itself can be the training tuna canning machine 7, so that the optimal operating parameters 9 of the tuna canning machine 2 are obtained by maximizing a target function using past production data 6 of own tuna canning machine 2.

In Figure 1 the optimization unit 3 is represented as an external device to the tuna canning machine 2, implemented for example by means of a remote server connected to the control unit 10 through the Internet, or by means of a local computer located in the own installation of the tuna canning machine 2, and in wired or wireless communication with the control unit 10. However, in another embodiment the optimization unit 3 can be part of the tuna canning machine 2 itself, as an additional element integrated into the machine or even integrated into the control unit 10 itself (in this case the communication between the optimization unit 3 and the control unit 10, since both are integrated in the same device). The data processing unit 4 could therefore form part of the control unit 10, or even be the same unit (that is, the control unit 10 of the tuna canning machine 2 can be configured to perform the functions of data processing unit 4 optimization unit 3).

The optimal operating parameters 9 obtained by the optimization unit 3 are applied in the new production of the tuna canning machine 2. There are different ways for this. For example, the optimization unit 3 can send these parameters to the control unit 10 (as shown in Figure 1), which is configured to receive the optimal operating parameters 9 for the new production and automatically apply configurable settings in the tuna canning machine 2 based on the optimal operating parameters 9 received.

Optimum operating parameters 9 may include machine parameters or settings that are manually made by a machine operator (due to, e.g., a physical change to be made to the tuna canning machine 2). In this case, the calculated optimal operating parameters 9 can be represented on a screen 14, so that an operator can configure the tuna canning machine 2 according to said parameters.

The optimization unit 3 is preferably configured to calculate the optimal operating parameters 9 through supervised machine learning that includes a training stage using the production data history 5.

The tuna canning machine 2 preferably comprises at least one sensor 11 configured to measure one or more properties of the tuna 12 during the canning process, where the properties of the tuna 12 form part of the input parameters 8 of the new production.

The at least one sensor 11 may comprise a temperature sensor configured to measure the temperature of the tuna entering the machine during the canning process and/or a NIR sensor (near-infrared spectral region) configured to measure, by means of spectroscopy techniques of the near infrared, at least one tuna property. In one embodiment, the NIR sensor is configured to measure at least one of the following properties of the tuna: humidity, protein, fat and ash content of the tuna.

Adaptive tuna canning system 1 can be applied to any type of tuna canning machine 2.

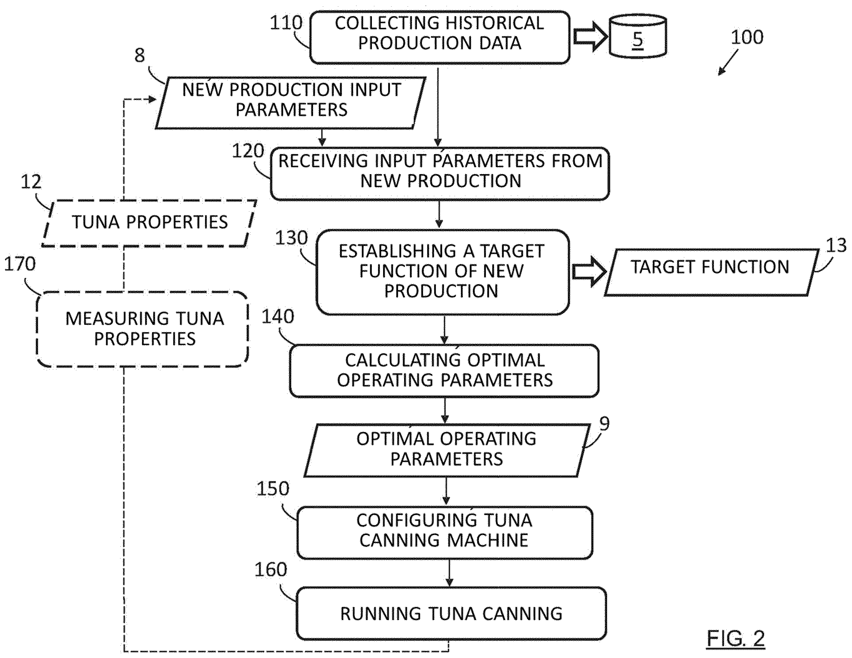

This invention also refers to an adaptive tuna canning method, as represented in the flow chart of **Figure 2,** according to a possible embodiment. Method 100 comprises the following steps:

- Compiling 110 a production data history 5 formed by a plurality of past production data 6 captured by at least one training tuna canning machine 7 during the tuna canning process in different past productions.
- Receiving 120 input parameters 8 of a new production of a tuna canning machine 2.
- Setting 130 a target function 13 for the new production of the tuna canning machine 2.
- Calculating 140, based on historical production data 5, optimal operating parameters 9 for the new production by optimizing the target function 13.
- Configuring 150 tuna canning machine 2 based on optimal operating parameters 9.
- Running 160 tuna canning in the new production of tuna canning machine 2.

Method 100 may comprise measuring 170 one or more properties of tuna 12 during the canning process in tuna canning machine 2; where the input parameters 8 of the new production comprise the properties of the tuna 12 measures. The properties of the tuna 12 measured may comprise, e.g., the temperature, humidity, protein, fat and/or ash content of the tuna. Measurements of the properties of tuna 12 can be made only once, e.g., before starting new production or during new production.

Alternatively, the measurements can be performed repetitively during the canning of tuna in the new production. In this case, as shown with dashed lines in the flow diagram of Figure 2, the method may comprise receiving 120, repeatedly during the running of the tuna canning of the new production, some input parameters 8 of the new production including one or more properties of the tuna 12 measurements in each iteration; calculating 140, for each iteration, optimal operating parameters 9; and configuring 150 the tuna canning machine 2 (by applying configurable settings on the tuna canning machine 2) based on the optimal operating parameters calculated at each iteration. In a similar embodiment of the system 1, the control unit 10 can be configured to send to the optimization unit 3, repeatedly during the new production, input parameters 8 of the new production, including one or more properties of the tuna 12 measured by the at least one sensor 11 in each iteration; and receiving, in each iteration, optimal operating parameters 9 obtained by the optimization unit 3. The control unit 10 can be configured to apply, automatically in each iteration, configurable settings in the tuna canning machine 2 based on the optimal operating parameters 9 received in each iteration (some of the optimal operating parameters can be manually adjusted by an operator).

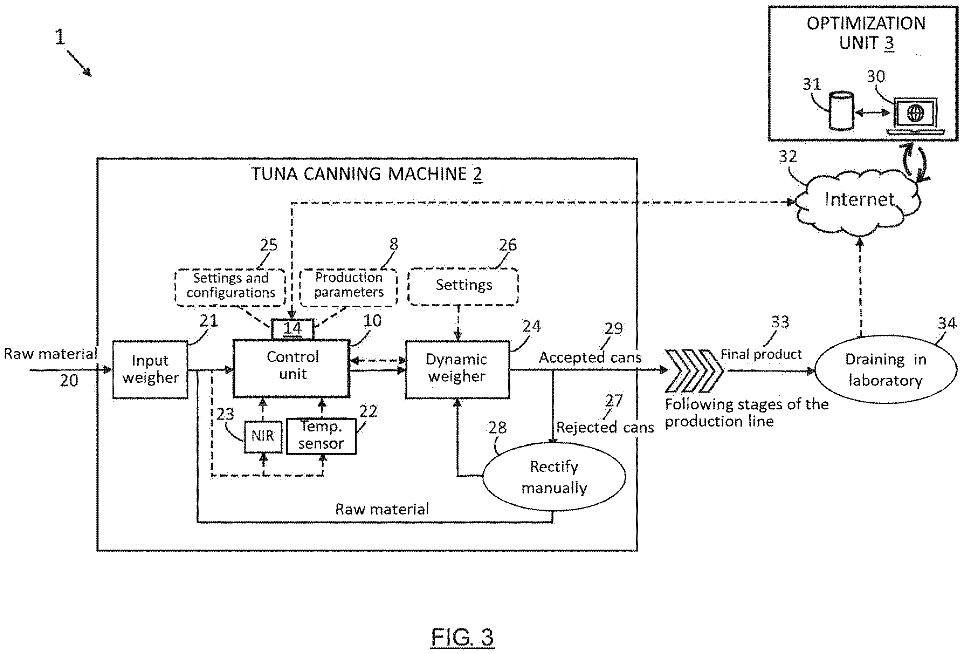

**Figure 3** illustrates a block diagram of the adaptive tuna canning system 1 according to a particular embodiment. The tuna canning machine 2, or packer, on which the adaptive canning method is applied, comprises:

- An input weigher 21, responsible for registering the weight of tuna (raw material 20) that is introduced at the entrance of the packer. At the entrance of the packer, the tuna can arrive in different ways, either in bags (e.g. of about 7-8 kg), in boxes, or directly continuously from a conveyor band, which may originate in the cleaning area, where the operators manually clean the fish and deposit it on said band.
- A plurality of sensors 11, including a temperature sensor 22 and a NIR sensor 23 (near infrared) that analyze the raw material 20, and record continuously (during the transport of the raw material 20 inside the packer) different characteristics of the same, such as temperature, proteins, fats, humidity, and ashes.
- A control unit 10, configured to display a user interface on a screen 14. The user interface can be implemented for example by means of a web application, in which relevant production KPIs, weight graphs, active alarms, and historical alarms can be displayed, among other data. From the user interface, an operator can configure various operating parameters of the tuna canning machine 2, through a series of settings and configurations 25. Various input parameters 8 of a new production to be carried out, or already in execution, can also be entered through the user interface. The computational tasks required to run the web interface and carry out the calculations required for floor plan views are performed on a computer, or similar device, installed on the machine. In addition to these functions, the control unit 10 is also responsible for collecting data from sensors (22, 23), weighers (21, 24) and other hardware of the tuna canning machine 2 and performing a first storage and preprocessing. The information captured and duly preprocessed is then sent via Internet 32 to a remote server 30 (which constitutes the data processing unit 4 of the optimization unit 3) for further processing.
- A dynamic weigher 24, is located at the exit of the packer once the tuna has already been introduced into empty cans. The dynamic weigher 24 records the weights of all the cans produced in the new production. In this way, those cans that do not meet the established weight margins will be rejected 27, and manually rectified 28, if possible. The dynamic weigher 24 may have a user interface through which an operator can enterweigher settings 26, such as the target packing weight of the cans produced. The dynamic weigher 24 can communicate directly with the packer control unit 10, allowing the latter to self-adjust without any manual intervention, to ensure that the average pack weight of the cans produced is exactly (or as close as possible) the target packing weight, set by the user via settings 26 (or, alternatively, via settings and configurations 25 of the control unit).

In one embodiment, the input weigher 21 is an automatic weighing system installed in a section of the conveyor before reaching the packer, with the function of weighing the tuna continuously. In another embodiment, the input weigher 21 is a scale configured to obtain punctual measurements of input tuna. The scale is used if the tuna is received in batches (e.g., boxes, bags, carts), where an operator located at the entrance of the machine must take each of these sets, place it on the scale and, once that weight has been recorded, deposit the tuna, emptying the container into a fish receiving tray that is connected to the packer's inlet conveyors. In this case, the tuna container element must be previously used to tare the scale, so that weight will be subtracted in each new weighing and the weight of the container itself will not be collected as part of the raw material.

The input tuna weight is used to later calculate the diminishment generated during packaging, that is, the amount of tuna mass that is lost in the process. This loss is one of the fundamental parameters to know to evaluate the performance of a line or factory, in order to take into account, the liquid that contained the tuna and that is lost in the compacting process, or the small crumbs and pieces that escape at different points of the machine (due to gaps, friction, etc.). For the calculation of the losses to be correct, all the product that is introduced into the machine must be weighed, as well as the weight of all the manufactured cans obtained by means of the dynamic weigher 24. To calculate the loss, the total net weight of the canned tuna is subtracted from the total weight of the tuna put into the machine. Therefore, when the target function is related to gain and filling weight accuracy, the input weigher 21 and the dynamic weigher 24 are important to obtain the optimal operating parameters 9.

The cans 29 accepted by the dynamic weigher 24 (i.e., those that have acceptable weights) are transported to the following stages of the production line until the final product 33 is obtained, with the added covering liquid, and the can duly closed and sterilized. Subsequently, the draining process 34 is carried out in the laboratory of a certain number of cans produced, randomly selected from a production, obtaining an average drained weight, which is defined as the arithmetic mean of the weights obtained after the process of draining the covering liquid. Knowledge of the drained weight and packing weight of a can (or the average packing weight of the cans produced in that production), together with the machine and raw material conditions, and settings at the time of manufacture, allows obtaining relevant production parameters, such as absorption and gain.

By providing the control unit 10 with access to Internet 32, the optimization unit 3 can collect the data collected during production. Subsequently, in the server 30 the data is structured, stored and processed to prescribe the optimal settings of the machine (i.e., optimal operating parameters 9). The optimization unit 3, in addition to providing relevant information about the process, has the ability to discover which are those variables that influence the final result of the production and, according to given input conditions, recommending to the user how to adjust them so that the objectives set according to a target function 13 (e.g. weight gain and precision objectives) are the best possible, based on the behavior obtained in past productions, previously received and stored in memory (e.g. in a database 31), which corresponds to a production data history 5. As explained above, said production data history 5 may correspond to past production data 6 of the same tuna canning machine 2, or other similar tuna canning machines located in different factories or locations.

The optimization unit 3 has the objective of prescribing a series of optimal parameters, providing recommendations of the machine parameters on which it is possible to act, and that, based on past production histories, they are identified as optimal for specific input conditions. To do this, optimization unit 3 performs the following steps:

- Identifying critical variables of the process.
- Identifying the key variables to be optimized and defying the target function. In this stage, it is identified when a machine configuration is considered optimal, that is, what the system should be based on to determine that certain settings are better or worse.
- Finally, an algorithm is used, which allows the automatic identification of the optimal parameters to recommend, that is, those parameters that maximize the target function. The use of two different techniques is considered: an algorithm based on iterative searches in the history matrix, and an algorithm based on machine learning models.

In the tuna canning process, different critical variables can be considered for the production process. In one embodiment, the following parameters related to weight and gain are considered:

- Filling or packaging weight, net weight and drained weight: The filling weight or packaging weight is the weight obtained by the dynamic weigher 24 just after packaging and corresponds to the weight of tuna or raw material 20 introduced in an empty can. The net weight represents the weight of tuna (i.e., fill weight) plus the packing liquid added at the end of the production line (final product 33). The drained weight is the resulting weight after carrying out a draining process 34 in the laboratory of the final product 33.
- Accuracy of packaging weight: The variation in weight is a key piece of information in the tuna packaging analysis process, since it determines the precision with respect to the target filling weight necessary to guarantee that the can always reach a minimum drained weight, which must necessarily comply with law. The smaller the deviation in the resulting packaging weight, the more the packaging target weight can be adjusted, that is, it will be necessary to apply a smaller margin, avoiding manufacturing cans with more tuna than necessary to meet the final target weight.
- Diminishment: Total losses that occur during the packaging process. During this process, these losses will be caused by different factors: by the liquid that is lost in the compaction of the tuna in the machine, and by the sawdust or fragments of tuna that are lost, e.g. at the time of cutting the raw material, due to friction with the blade. To find the loss, the relationship between the accumulated weight at the packer outlet, measured by weighing all the cans using the dynamic weigher 24, and the weight of tuna just at the entrance to the packer, measured using the input weigher 21, is calculated.
- Absorption: The tuna behaves like a sponge when a covering liquid is added, absorbing and retaining part of this liquid. Absorption is defined as the ratio between the average drained weight (at the end of the process), and the average filling weight (at the outlet of the packer). The absorption values depend on numerous factors (the characteristics of the raw material, the covering liquid, temperatures, etc.), with normal absorption values above 110%-115%.
- Gain: Percentage of weight that is obtained at the end of the process, with respect to the weight of raw material 20 that enters the packer. It is calculated, therefore, by subtracting the packaging diminishment from the input weight of the packer, and then multiplying by the absorption factor.

Additionally, or alternatively, the following critical parameters related to product quality may also be considered:

- Appearance at the end of the packaging: It is important that at the exit of the packer there are no remains of skin, sangacho, thorns, etc. In addition, the appearance of the tuna cake can also be observed, being better the more compact it looks, without rims, holes, and if the structure of the myotome of the loins can be preserved. According to one aspect of this invention, this variable can be objectively measured with an artificial vision system located before or after the dynamic weigher 24.
- Final appearance: refers to the presentation of the tuna cake at the time of opening the can by the final consumer. Three aspects of final appearance can be considered: appearance when the container is opened, that is, as soon as the can is opened; leading appearance, after emptying the liquids; and appearance and consistency of the final cake, once the cake has been removed from the container.

The following critical parameters related to the performance of the production line can also be considered:

- Performance and availability of the machine: These parameters have to do with the proper functioning of the machine. Performance refers to the relationship between the number of cans manufactured, and those that could be manufactured if the machine works at its maximum rate for the entire time it was producing. On the other hand, availability refers to the relationship between the effective production time, and the time that the machine should have been producing, if no unscheduled stoppage had occurred, such as those derived from alarms, breakdowns, etc.

Once the critical variables have been identified, the desired final objectives are defined. The final objective is related to maximizing the profitability of the production line. Depending on the critical variables considered, different final objectives can be expressed:

1. Maximize gain and weight accuracy, optionally also considering compliance with minimum and necessary quality standards for the manufactured product.
2. Maximize the performance and availability of the tuna canning machine, so that its capacity is used to the maximum during scheduled production times.

The first objective is focused directly on the final product, and on the optimization of the raw material. This objective, related to gain, implicitly implies the optimization of diminishment and absorption. Accuracy in weight translates into optimizing the standard deviation of the weights, trying to obtain the minimum possible value. The lower this deviation, the lower the target packaging weight may also be, reducing the margin that must be maintained to meet the established minimums. The second objective focuses on other aspects of the production line, related to the use of the machine, minimization of breakdowns, preventive maintenance, etc.

Once the critical parameters, and the variables to be optimized to meet the defined objectives have been defined, they are grouped into a single target function that encompasses them, and which will be the one that the algorithm will try to optimize.

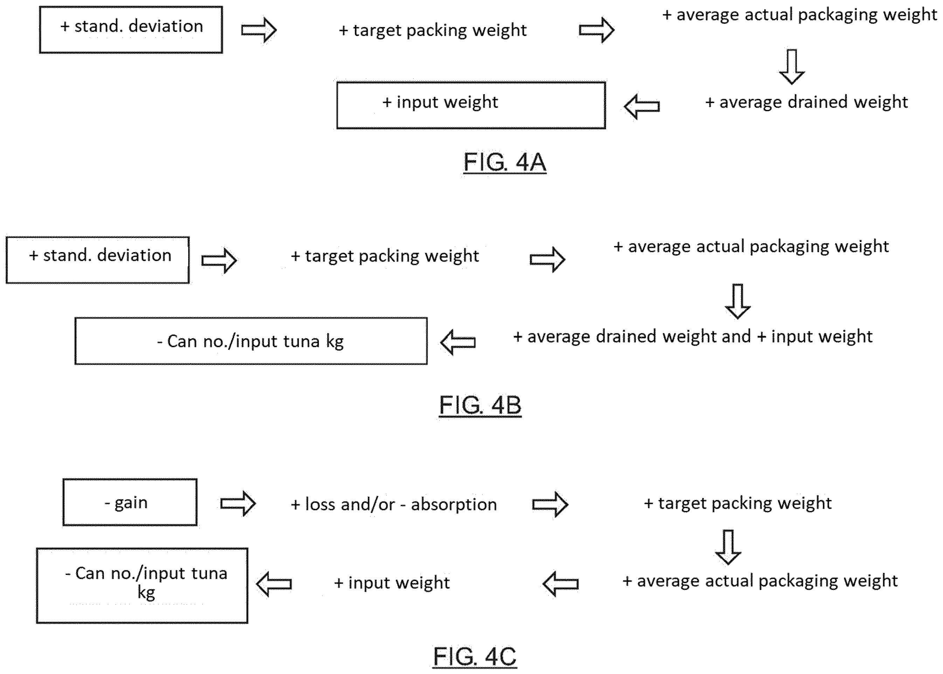

Measured gain as the ratio between the final drained weight, and the weight at the entrance to the packer, the standard deviation of the machine does not influence said value, since with a greater standard deviation the accumulated weight of tuna at the entrance will increase, but also the accumulated weight of tuna after draining. Considering that you want to produce a certain number of cans, if the machine has a higher standard deviation, both the input weight, and the output weight will increase to produce the same number of cans (as shown in the chart in **Figure 4A**).

However, if instead of considering output weight, the number of cans manufactured is counted, both gain and precision in weight can be grouped together, being able to take as a final objective to optimize the number of cans produced per mass unit of input tuna in the packer (e.g. number of cans produced per kilogram of input tuna), since this variable is affected both by the standard deviation of the weight (accuracy in weight), and by the gain. In particular, as illustrated in **Figures 4B and 4C,** an increase in the standard deviation causes a decrease in the number of cans per kilogram of input tuna (Figure 4B), and a decrease in gain also causes a decrease in the number of cans per kilogram of input tuna (Figure 4C).

On the other hand, in addition to achieving the objectives of weight gain and precision, the appearance of the product can also be considered, either the appearance when it comes out of the package and/or the final appearance obtained. The quality of the required appearance can be a more or less a relevant factor. In the event that appearance is not considered an important factor, accuracy in weight and final gain can be prioritized first. In cases where appearance is key, it can also be included in the final objective, although to achieve this it is necessary in many cases to increase the packaging weight.

With regard to the appearance of the final packaging, this can be objectively assessed by means of an artificial vision system, based on the elements detected in the image (residues of skin, sangacho, thorns, etc.) and the height of the tuna cake, and its distribution inside the can.

The final appearance of the product can be evaluated manually, although an artificial vision system could alternatively be used to objectify the measurement. The final appearance is defined during the draining process, wherein a certain number of cans are opened, the user observes their appearance, and manually enters the evaluation they consider into the system. In order to quantify the final appearance, a scale can be defined, e.g., a scale of five values in which value 1 represents an unacceptable or poor appearance, and value 5 represents an optimal appearance.

When it comes to maximizing the number of cans produced per mass unit of input tuna (that is, maximizing gain and weight accuracy), the appearance of the product can also be taken into account (be it the appearance of the final packaging, the final appearance or a combination of both). In that case, it has to be established how much importance should be given to each of the two factors. Two options can be considered:

A. That a minimum appearance, indicated by the user, is considered as a necessary condition that the system must meet. In this case, the minimum acceptable measure would be added as one more variable of the production parameterization, which must be registered at the beginning of it. Thus, the appearance is considered as an input condition, and gain will be optimized as much as possible, taking into account that the output appearance is always greater than or equal to the specified one.

B. The second option is to incorporate the two variables in the target function to be optimized, applying a relevance factor to each of them, specified by the user, which represents to what extent each of the target variables should be optimized.

If the final appearance is applied, in both cases it will be essential that during the registration of drained weights in the system by the user, the appearance obtained in the open cans is also registered, by means of the defined scale, in order to later have information on whether the system is meeting the desired objectives with the machine settings applied in each production.

In the second option, the target function is made up of two terms, the one that represents the number of cans manufactured per mass unit of input tuna (e.g. for each Kg of input tuna), and the appearance. The relevance factors that must be applied to each term (which we can call the gain factor and the appearance factor) can be considered to be two percentages, and both must add up to 100%. Thus, for example, if appearance is of little or very little importance for a given product, prioritizing maximizing the number of cans, an importance percentage of 10% or 20% could be set for the appearance factor and 90% or 80%, respectively, for the gain factor. These percentages must be set by the user for each product to be manufactured and are added as two new parameters to be entered manually at the beginning of a production.

On the other hand, in addition to establishing the importance of each term, these can also be converted to relative values between 0 and 1. In this way, the maximum function can be determined, with a value equal to 1, at which the optimization algorithm has to get as close as possible, being able to compare the results obtained in different productions. For example, the number of cans manufactured per Kg of tuna will be higher the lower the target final weight, without meaning that the gain will be higher. Obtaining the relative values, it is possible to have an idea of the profitability obtained in each case, and different productions can be compared, regardless of the rest of the conditions.

To transform the gain value, an ideal maximum gain can be calculated, considering perfect conditions. These conditions are set, for example, as standard deviation = 0, diminishment = 0%, ideal absorption = 130% (a value higher than the usual values is set).

Under these conditions, a target packing weight can be established:

$$\text{Ideal packing weight} = (\text{drained weight} / \text{ideal absorption}) * 100$$

In addition, the fact that the deviation is zero implies that the machine always packs the exact weight of tuna in each can, so that the input weight of tuna for a can would be equal to the packing weight. Thus, the maximum number of cans that could be manufactured under ideal conditions for each Kg of tuna would be:

$$\text{Number of cans} = 1000\text{gr} / \text{Ideal packing weight},$$

wherein:

$$\text{Ideal packing weight} = \text{target drained weight} * 1.30 \text{ (ideal absortion)}$$

As an example, for a required drained weight of 40 grams, the target pack weight would be (40 /1,30) = 30,77 grams, and the maximum number of cans that can be manufactured with 1 Kg of tuna at the inlet of the packer, considering null diminishment, it would be (1000 / 30,77) = 32,5 cans.

Thus, the first factor of the target function is the following, where $\alpha$ is the relevance factor assigned by the user to the gain factor:

$$\alpha * (\text{number of cans per Kg} / \text{maximum number of cans per kg})$$

Regarding the second term of the target function, it is necessary to transform the appearance value to a factor between 0 and 1, simply dividing the appearance value obtained by the maximum possible, which according to the scale defined in the previous example will be 5. Therefore, the second factor of the target function is:

$$\gamma * (\text{obtained appearance/maximum appearance})$$

Thus, putting both parts together, the target function can be expressed with the following formula:

$$\alpha \times \frac{num\ cans\ per\ kg\ \times targ\ drained\ weight \times 1.30}{1000} + \gamma \times \frac{appearance\ value}{5}$$

Wherein:

$\alpha$: relevance factor assigned by the user to the gain factor;
$\gamma$: relevance factor assigned to appearance factor, both values between 0 and 1;
*num cans per kg:* number of cans per kg obtained for a specific production;
*targ drained weight:* target drained weight to be obtained in the final can;
*appearance value:* measure of the appearance obtained in production following the defined scale, with values between 1 and 5.

The higher the value calculated for the target function, the higher the gain obtained in the corresponding production.

Next, two different algorithms are detailed that can be used for the automatic identification of the optimal settings (i.e., identification of the optimal operating parameters 9): an algorithm based on iterative searches and an algorithm based on machine learning models.

With respect to the algorithm based on iterative searches, whether the appearance is initially set as the minimum requirement that the product to be manufactured must meet, or if its measurement is included in the target function to be maximized, the process to find the recommended settings is similar in both cases and is explained below.

The identification and compilation of all the parameters that are part of the process have already been carried out previously:

- Production parameters: Variables or parameters related to the parameterization of production, on which it is not possible to act to improve final gain, but rather are given in advance, such as:

  - Variables related to the raw material: species of tuna (e.g. Thunnus alalunga, Thunnus obesus, Thunnus albacares, Katsuwonus pelamis), type of raw material (e.g. loins, pieces and crumbs, or combinations of these), state of the raw material (e.g. whole fish, thawed, refrigerated loins), origin of the tuna (fishing area), etc.
  - Variables related to the final product: can format (e.g. RO-70, RO-85, RO-100, RO-150), type of packaging, liquid of coverage (e.g. olive oil, extra virgin olive oil, sunflower oil, other vegetable oils, water, water and oil, brine, sauce), target drained weight, etc.

- Tuna properties 12: Measurable parameters of the tuna (or raw material 20), variables measured continuously, by means of sensors, related to the properties of the raw material 20, such as temperature, humidity, proteins, fat and ash content of the tuna , which are collected by temperature and NIR sensors.
- Machine properties: The intrinsic characteristics of the packer, which cannot be modified, which are entered into the system manually when a new machine is registered, and which will depend on the type of packer machine used, for example: type of machine, type of advancing conveyor bands, type of compaction bands, type of lateral bands, band length, etc. In the event that any parameter of the machine is changed (e.g., changing the bands, removing or installing antechambers), which are not usual changes, the new values will be entered manually into the system.
- Modifiable Settings: They are all those characteristics of the machine that can be modified, and on which you can act to improve final gain. The modifiable settings can be divided into:

  - Parameters that are manually recorded and modified, for example: type of nozzle (measures, conicity), initial and final heights of the advance and compaction bands (depending on the type of packer).
  - Parameters that are collected automatically, e.g.: if the pressing device is active or not (if any), and its striking frequency, the selected recipe, the production rate, the advance, modified advance, compaction pair, if blowing is applied, steam injection, pusher pressure, maximum compacting speed, acceleration, and deceleration of servomotors and variators, etc. (will depend on the packer type).

Although the target packing weight could be considered at first as a production parameter, it can also be considered as a modifiable setting that can be acted upon to increase gain, in the event that tuna canning machine 2 implements an automatic adjustment (for example, by self-adjusting the advance of the machine), so that the average pack weight of all accepted cans 29 approaches the target pack weight indicated by the user.

- KPIs: indicators automatically calculated by the control unit 10 from all the data captured during production. They can be used in a descriptive analytical stage to relate the values obtained with the adjustments and properties of the raw material, and to show information to the user about the results obtained with each configuration. Indicators include, by way of example, the following: OEE, availability, performance, diminishments, weight mean, weight standard deviation, number of manufactured cans, number of working hours, downtime due to alarms, downtime for maintenance, absorption, gain.
- Final metrics: the final outputs or metrics obtained as a result of the process, such as drained weight, final appearance, number of cans per Kg of tuna (or per other unit of mass, such as ton of tuna). As the target function has already been defined, in the final metrics the target value can be calculated and included by applying the previously determined formula. The target value could be calculated by the tuna canning machine 2 itself or later by the optimization unit 3, once it has received the data from past productions 6, necessary to calculate the target value.

For each registered production, all the related variables are stored, both those that are collected directly from the plant, and those that are calculated later, also including the result of the target function as one more variable. With these data, a history is formed in the form of a table or matrix, wherein each row represents a production, and each column represents a different variable. As the number of registered productions increases, the table grows, adding new data from past productions 6, already made with a given tuna canning machine 2. The more information there is, and the greater variability in the values that the considered parameters take, the better the optimal settings can be prescribed to optimize the gain and appearance parameters.

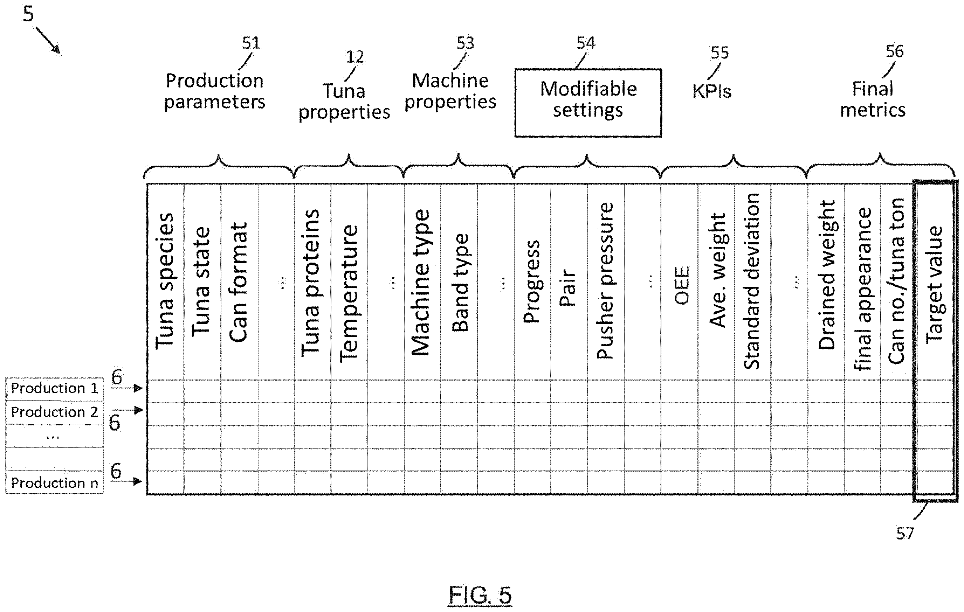

**Figure 5** shows an example of a table where, in each row, the data of past productions 6 (production 1, production 2, ..., production n) are compiled, forming the data history of productions 5. Columns record production parameters 51, tuna properties 12, machine properties 53, modifiable settings 54, KPIs 55 and final metrics 56, including target value 57. If any of the variables of the production parameters 51 changes value during a production of the machine, it is determined that it is another additional past production (i.e. a new row is added in the table, corresponding to new data from a past production 6) for system purposes. The same can happen if other parameters change during production, such as the properties of the machine 53, the properties of the tuna 12, or the target packing weight (for example, if the average temperature of the tuna measured by the temperature sensor changes in a different way), it can be considered as a different past production with the new temperature value, and incorporate said production in another row of the production data history table 5).

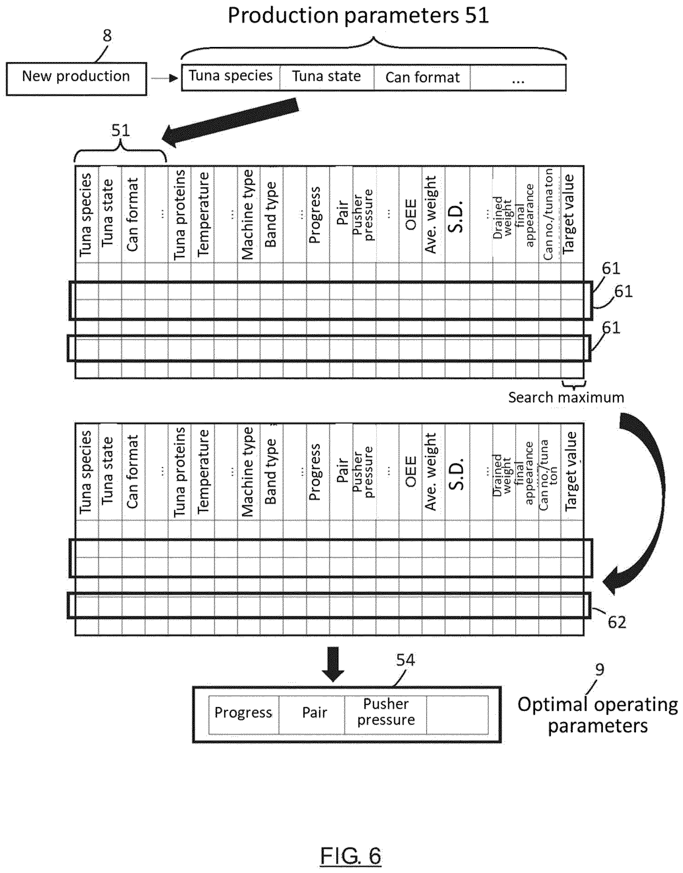

Once enough information has been collected in the production data history 5, the algorithm can make prescriptions about the optimal settings that can be modified to maximize the final objective. To do this, as illustrated in the example in **Figure 6**, the algorithm based on iterative searches looks for the table for those productions whose input parameters match input parameters 8 of the new production. In the example shown, the input parameters 8 of the new production are defined by the production parameters 51, although they could include others (such as the properties of the machine 53 or the properties of the tuna), depending on the search precision required. Once the corresponding rows have been selected in the table (selected outputs 61), the result of the target function is checked for each of them, looking for the one that obtains the highest value. Once found, the settings and configurations registered in the chosen row are selected (optimal production 62), corresponding to the modifiable settings 54, which will depend on the type of tuna canning machine 2. The selected settings and configurations (e.g. advance, torque, pusher pressure, etc.) are the optimal operating parameters 9 that are applied below to the tuna canning machine 2 in the new production.

Regarding the algorithm based on machine learning models, machine learning techniques are applied for the prediction and prescription of parameters. To use this type of algorithm, it is necessary to have a sufficient history, that is, there must be a large number of registered productions, with some variability in the parameters collected. Optionally, to obtain a greater quantity and variability of the data, these can be collected from multiple tuna canning machines, located for example, in different factories, cities, countries, etc.

In the first place, the prediction system of the final target value is developed, given a series of input parameters, which will include both the parameters that define the production, the properties of the raw material, and certain machine settings. This is a regression problem, since the expected output is a continuous variable, which is itself a subfield of supervised machine learning. There are different techniques to solve this type of problem, among which linear regression algorithms, logistic regression, decision trees and deep learning algorithms stand out.

Regardless of the algorithm applied, the process is similar, and is mainly made up of a training stage, a validation stage, and a test stage. The training stage is where most of the available historical data is used. The algorithm is given a multitude of records, with their corresponding inputs and the expected output for each of them, so that the machine learning the algorithm can learn based on historical data and identify patterns that would be impossible to extract manually. It is important that the variability of the data is high since, if not, the result could be biased to a specific case, making the system unable to generalize when the input parameters change, providing incorrect outputs.

In the validation stage, a set of production records is used, of which the expected output is known, and which have not been used to train the algorithm. For each of them, the output returned by the already trained model is obtained, and the results are analyzed in order to validate the system, adjust the model parameters, etc. Finally, in the test stage, the model is executed directly with new data, which the algorithm has not previously used, and whose output is not previously known.

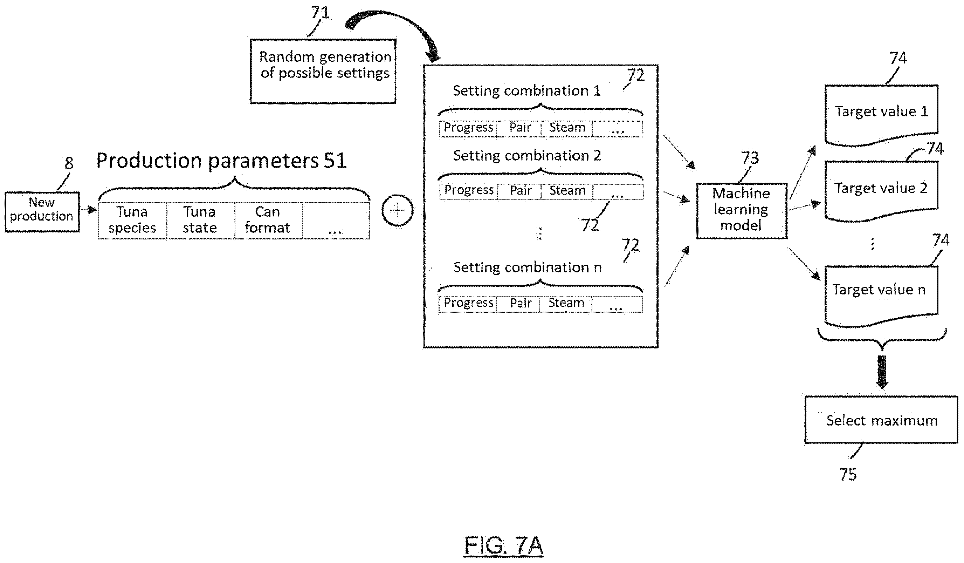

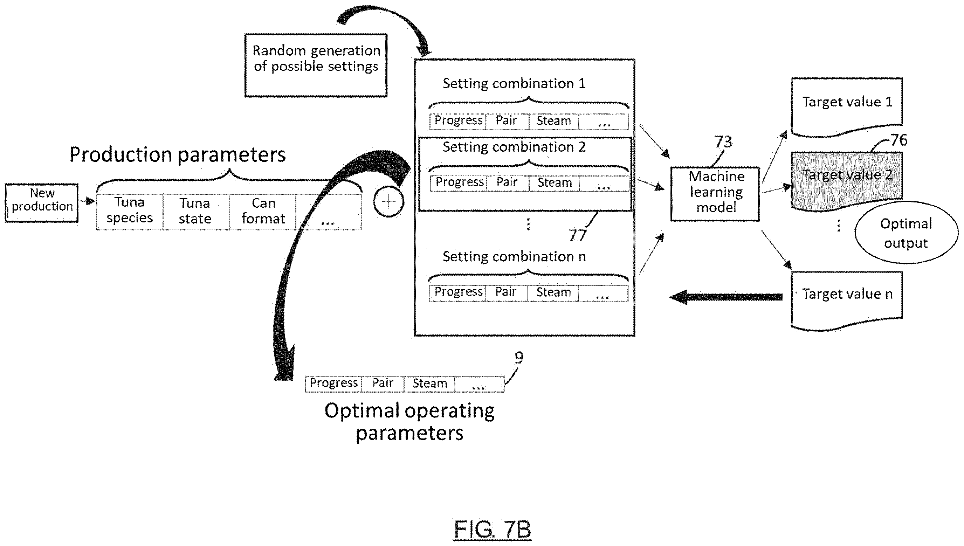

The system works in such a way that, for a given set of conditions (input parameters 8 defining a new output), the already trained machine learning model 73 is executed using these parameters as input to the algorithm (inference), performing a random generation 71 of possible settings to establish a set of combinations of settings 72 that include possible values that the machine settings can take, obtaining a prediction of the value of the target function, target value 74, for each combination of settings 72 , as represented in the chart of **Figure 7A.** Then, the target value 74 with a higher value (maximum target value 76) is selected 75, and the combination of selected settings 77 corresponding to the maximum target value 76 are retrieved, which are the optimal operating parameters 9 to apply in the new production of tuna canning machine 2 (**Figure 7B**).

A user modifiable parameter that is very relevant to the gain obtained at the end of production is the target pack weight, which is the target weight set in the dynamic weigher and/or in the control unit 10 for accepted cans 29. This variable is normally entered manually by the user, estimating it according to the minimum drained weight that the final product must meet, and according to values also estimated for packaging diminishments and coverage liquid absorption. According to an embodiment of this invention, the selection of this value can be advantageously automated, as well as the selection of the rest of the modifiable configurations 54 of the machine. Following the same approach described, the optimization algorithm can prescribe the optimal target packaging weight, which maximizes the profitability of a particular production. The optimal target packing weight calculated by the optimization unit 3 can be sent to the tuna canning machine 2 for manual application by an operator or, alternatively, it can be received and applied in an automated way in the control unit 10.

When a sufficiently large number of data have been collected in the production data history 5, a total self-adjustment of the machine can be reached, without the need for user intervention. To ensure optimal automated operation, it is advisable to have a large number of productions with different input parameters, settings, and even different machines and factories.

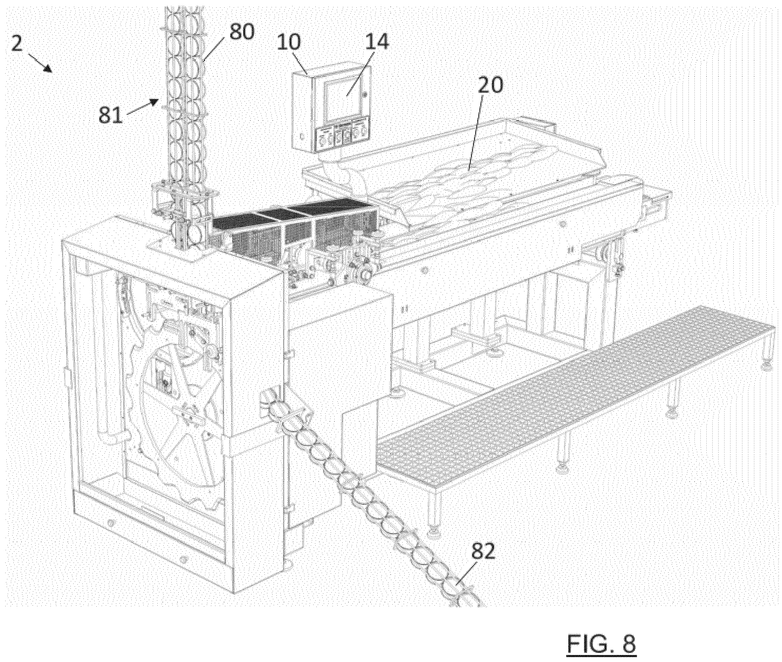

The adaptive tuna canning system of this invention can be applied to any tuna canning machine. **Figure 8** illustrates, by way of example, a perspective view of a tuna canning machine 2, in which blocks of tuna (raw material 20), previously weighed on a scale (input weigher 21), are introduced manually on a packer infeed conveyor. The tuna canning machine 2 packs the tuna into empty cans 80 received through an empty can feeding system 81, directing the full cans 82 of tuna to the dynamic weigher 24 (not shown in the Figure).

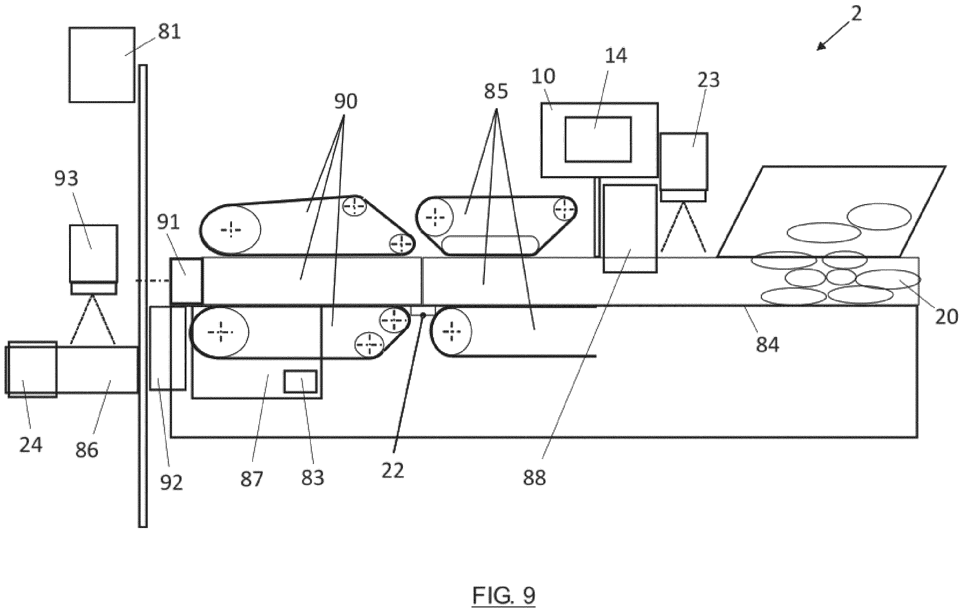

**Figure 9** shows, in a schematic side view, a tuna canning machine 2 similar to the one shown in Figure 8, where the dynamic weigher 24 is shown at the outlet of the packer, receiving the full cans 82 from the packer through a conveyor system outlet 86. In this embodiment, the tuna canning machine 2 has several sensors installed for measuring the properties of the tuna 12, in particular, a temperature sensor 22, a NIR sensor 23 and a vibration sensor 83.

The temperature sensor 22 comes into contact with the tuna cakes to measure the temperature when the tuna cakes have already been compacted by a density control system 85, implemented by means of a group of conveyors that exert pressure on the tuna cakes. The density control system 85 can be optionally assisted by a rammer 88, which is responsible for controlling and homogenizing the density of the tuna, trying to distribute the tuna on the conveyor bands in a more homogeneous way to reduce the possible gaps that may appear.

The NIR sensor 26 is responsible for measuring the degree of humidity, fat, protein and/or ash content of the raw material 20 that enters the packer through a feeding conveyor system 84. The vibration sensor 83, located by example in the indexer-reducer assembly 87 of the packer, it can be used to detect undesired operations of the machine according to a vibration pattern.

An advance conveyor system 90 is responsible for moving the tuna cakes, already compacted by a density control system 85, towards a nozzle 91 through an intermittent start-stop movement, which generates an intermittent advance, controlled, for example, by a servomotor. Next, the nozzle 91 is responsible for shaping the tuna cakes with a certain shape that adapts to the empty cans 80, and a pusher 92 introduces the tuna portions into the empty cans according to an adjustable pressure and path. The base of the pusher (the part of the pusher that contacts the portion or tuna cake) can have perforations through which a blowing system of the machine can inject air and/or water vapor at the beginning of the movement of recoil of the pusher, in order to prevent the portion of tuna from sticking to the pusher 92 when it starts to recoil.

The tuna canning machine 2 shown in Figure 9 also comprises an artificial vision system 93 located at the output of the packer, on the output conveyor system 86 (that is, after the stage of filling the empty cans), to capture the appearance characteristics of manufactured cans. The artificial vision system 93 can be used to make height measurements of the tuna portions canned by the pusher 92. To do this, the artificial vision system 93 can comprise a laser profile sensor configured to make one or more height measurements (or profile detection) of the portion of tuna in the can. The control unit 10 receives these height measurements and is responsible for dynamically adjusting the height of the canned tuna portions by controlling the pressure and the path of the pusher 92.

The artificial vision system 93 may also comprise a lighting system and a color camera (e.g., linear RGB camera) configured to capture color images of the canned tuna portions as they progress through the output conveyor system 86. The artificial vision system 93 is preferably configured to detect defects (e.g., detection of sangacho, dark areas, foreign objects, holes in the tuna, or the presence of raw material in the sealing area) in the canned tuna portions by analyzing the images captured by the color camera and/or by analyzing the height measurements made by the laser profile sensor.

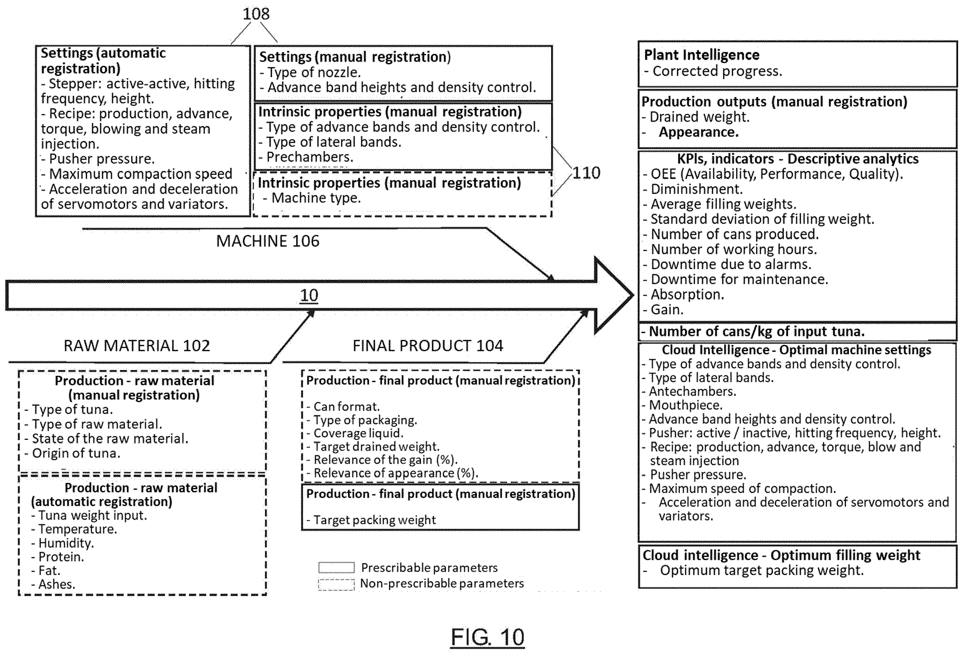

**Figure 10** shows, as an example, a list of parameters that can be used by the adaptive tuna canning system 1 based on the tuna canning machine 2 of Figure 9. A series of parameters can be entered manually (manual registration) through a graphical interface of the control unit 10 of the tuna canning machine 2, while other parameters can be automatically generated (automatic registration). Parameters can include:

- Raw material parameters 102:

    - Manual registration: Species of tuna, raw material type, raw material state, tuna origin.
    - Automatic registration (by sensors 11 or input weigher 21): Input tuna weight, temperature, humidity, protein, fat, ashes.

- Final product parameters 104:

    - Manual registration: can format, packaging type, coverage liquid, target drained weight, gain relevance (%), appearance relevance (%).
    - Manual registration (subject to prescription or recommendation): Target packaging weight.

- Machine parameters 106:

    ○ Machine settings 108:

        - Manual registration: Type of nozzle, heights of advance conveyor bands (from the advance conveyor system 90) and density control (from the density control system 85).
        - Automatic registration: rammer 88 (active/inactive, hitting frequency, height), recipe (production, advance, torque, blowing and steam injection), pusher pressure, maximum compaction speed, acceleration and deceleration of servomotors and variators.

    ○ Intrinsic properties of the machine 108:

        - Manual Registration: machine type.
        - Automatic registration (subject to prescription or recommendation): advance and density control bands type, side bands type, antechambers.

The right column of Figure 10 shows different parameters obtained from the production:

- Plant intelligence (adjustments obtained by the control unit 10): corrected advance (advance of the advance conveyor system 90, based on the weights measured by the dynamic weigher 24, and the target packaging weight).
- Production outputs (manual registration in the laboratory): drained weight, appearance.
- KPIs: OEE (availability, yield, quality), diminishments, fill weight standard deviation, number of cans produced, number of working hours, alarm downtimes, maintenance downtimes, absorption, gain.
- Number of cans/kg of input tuna.
- Cloud intelligence (obtained by optimization unit 3):

    ○ Optimum machine settings: advance and density control bands type, side bands type, antechambers, nozzle type, advance and density control heights, rammer (active/inactive, striking frequency, height), recipe (production, advance, torque, blowing and steam injection), pusher pressure, maximum compaction speed, acceleration and deceleration of servomotors and variators.

∘ Optimum Fill Weight: Optimum target packing weight.

In the example in Figure 10, the parameters that are susceptible to prescription are highlighted from those that are fixed and, therefore, not susceptible to prescription. The parameters that are amenable to prescription are mostly machine parameters 106, although an end product parameter 104, the optimum target pack weight, can also be prescribed. In addition, the parameters related to the raw material 102 could also be recommended, although their modification would have to be done manually if it can be carried out. For example, recommending the introduction of tuna at a certain temperature, or recommending the purchase of tuna of a specific species or origin, depending on the product to be manufactured.

As described above, through the optimization of a target function 13, the optimization unit 3 can calculate and prescribe optimal operating parameters 9 for the new production. The various parameters employed (raw material parameters 102, final product parameters 104, machine parameters 106) by the adaptive tuna canning system 1 may vary and will depend on the particular embodiment. Likewise, the chosen target function and the optimal operating parameters 9 to be optimized, can also be selected in an initial configuration of the system. For example, in one embodiment it can be determined to optimize only the target packaging weight, keeping the rest of the configurable parameters unchanged.

**Claims**

1. An adaptive tuna canning system, comprising:

   a tuna canning machine (2) comprising a control unit (10) in charge of controlling the machine during the tuna canning process of a production; and
   an optimization unit (3) comprising a data processing unit (4) configured to:

   collect a production data history (5) formed by a plurality of past production data (6) captured by at least one training tuna canning machine (7) during the tuna canning process in different past productions;
   receive input parameters (8) from a new production of the tuna canning machine (2);
   establish a target function (13) for the new production of the tuna canning machine (2); and
   calculate, from the historical production data (5), optimal operating parameters (9) of the tuna canning machine (2) for the new production by optimizing the target function (13);

   and wherein the tuna canning machine (2) is configured to execute the canning of tuna in the new production based on the optimal operating parameters (9).

2. The system according to claim 1, wherein the tuna canning machine (2) comprises at least one sensor (11) configured to measure one or more properties of the tuna (12) during the canning process; and wherein the input parameters (8) comprise the tuna properties (12) measured by the at least one sensor (11).

3. The system according to claim 2, wherein the at least one sensor (11) comprises a temperature sensor (22) configured to measure the tuna temperature.

4. The system according to any of claims 2 to 3, wherein the at least one sensor (11) comprises a NIR sensor (23) configured to measure at least one tuna property.

5. The system according to claim 4, wherein the NIR sensor (23) is configured to measure at least one of the following tuna properties (12): humidity, protein, fat content and tuna ash.

6. The system according to any of claims 2 to 5, wherein the control unit (10) is configured to:

   - sending to the optimization unit (3), repeatedly during the new production, input parameters (8) of the new production including one or more tuna properties (12) measured by the at least one sensor (11) in each iteration; and
   - receiving, in each iteration, optimal operating parameters (9) obtained by the optimization unit (3).

7. The system according to claim 6, wherein the control unit (10) is configured to apply, automatically in each iteration, configurable settings in the tuna canning machine (2) based on the optimal operating parameters (9) received in each iteration.

8. The system according to any of claims 1 to 5, wherein the control unit (10) is configured to:

  - receiving the optimal operating parameters (9) for the new production; and
  - automatically applying configurable settings to the tuna canning machine (2) based on optimal operating parameters (9).

9. The system according to any of the preceding claims, wherein the target function (13) includes maximizing the number of cans produced per mass unit of input tuna.

10. The system according to any of the preceding claims, wherein the optimization unit (3) is configured to calculate the optimal operating parameters (9) through supervised machine learning that includes a training stage using historical production data (5).

11. An adaptive method of canning tuna, comprising:

  - collecting (110) a production data history (5) formed by a plurality of past production data (6) captured by at least one training tuna canning machine (7) during the tuna canning process in different past productions;
  - receiving (120) input parameters (8) of a new production of a tuna canning machine (2);
  - establishing (130) a target function (13) for the new production of the tuna canning machine (2);
  - calculating (140), from the production data history (5), optimal operating parameters (9) of the tuna canning machine (2) for the new production by optimizing the target function (13);
  - configuring (150) the tuna canning machine (2) based on the optimal operating parameters (9); and
  - running (160) the tuna canning in the new production of the tuna canning machine (2).

12. The method according to claim 11, comprising measuring (170) one or more tuna properties (12) during the canning process in the tuna canning machine (2); and wherein the input parameters (8) of the new production comprise the properties of the measured tuna (12).

13. The method according to claim 12, wherein the tuna properties (12) measured during the canning process comprise the tuna temperature.

14. The method according to any of claims 12 to 13, wherein the tuna properties (12) measured during the canning process comprise at least one of the following tuna: humidity, protein, fat and ash content of the tuna.

15. The method according to any of claims 12 to 14, comprising:

  - receiving, repeatedly during the new production, some input parameters (8) of the new production including one or more properties of the tuna (12) measured in each reiteration;
  - calculating, for each iteration, optimal operating parameters (9); and
  - applying configurable settings in the tuna canning machine (2) based on the optimal operating parameters calculated in each iteration.

**Patentansprüche**

1. Adaptives Thunfischkonservensystem, umfassend:

  eine Thunfischkonservenmaschine (2), umfassend eine Kontrolleinheit (10), die für die Kontrolle der Maschine während des Thunfischkonservenvorgangs einer Produktion zuständig ist; und
  eine Optimierungseinheit (3), umfassend eine Datenverarbeitungseinheit (4), die für Folgendes konfiguriert ist:

  Sammeln einer Produktionsdatengeschichte (5), die durch eine Vielzahl von vergangenen Produktionsdaten (6) gebildet wird, die durch mindestens eine Trainings-Thunfischkonservenmaschine (7) während des Thunfischkonservenvorgangs in unterschiedlichen vergangenen Produktionen erfasst wurden;
  Empfangen von Eingangsparametern (8) aus einer neuen Produktion der Thunfischkonservenmaschine (2);
  Etablieren einer Zielfunktion (13) für die neue Produktion der Thunfischkonservenmaschine (2); und

Berechnen von optimalen Betriebsparametern (9) der Thunfischkonservenmaschine (2) für die neue Produktion aus den historischen Produktionsdaten (5) durch Optimieren der Zielfunktion (13); und wobei die Thunfischkonservenmaschine (2) dazu konfiguriert ist, das Eindosen von Thunfisch in der neuen Produktion basierend auf den optimalen Betriebsparametern (9) auszuführen.

2. System nach Anspruch 1, wobei die Thunfischkonservenmaschine (2) mindestens einen Sensor (11) umfasst, der dazu konfiguriert ist, eine oder mehrere Eigenschaften des Thunfischs (12) während des Konservenvorgangs zu messen; und wobei die Eingangsparameter (8) die Thunfischeigenschaften (12) umfassen, die durch den mindestens einen Sensor (11) gemessen wurden.

3. System nach Anspruch 2, wobei der mindestens eine Sensor (11) einen Temperatursensor (22) umfasst, der dazu konfiguriert ist, die Thunfischtemperatur zu messen.

4. System nach einem der Ansprüche 2 bis 3, wobei der mindestens eine Sensor (11) einen NIR-Sensor (23) umfasst, der dazu konfiguriert ist, mindestens eine Thunfischeigenschaft zu messen.

5. System nach Anspruch 4, wobei der NIR-Sensor (23) dazu konfiguriert ist, mindestens eine der folgenden Thunfischeigenschaften (12) zu messen: Feuchtigkeit, Protein, Fettgehalt und Thunfischasche.

6. System nach einem der Ansprüche 2 bis 5, wobei die Kontrolleinheit (10) für Folgendes konfiguriert ist:

- Senden an die Optimierungseinheit (3), wiederholt während der neuen Produktion, von Eingangsparametern (8) der neuen Produktion, die mindestens eine oder mehrere Thunfischeigenschaften (12) einschließen, die durch den mindestens einen Sensor (11) bei jeder Iteration gemessen werden; und
- Empfangen, in jeder Iteration, von optimalen Betriebsparametern (9), die durch die Optimierungseinheit (3) erhalten werden.

7. System nach Anspruch 6, wobei die Kontrolleinheit (10) dazu konfiguriert ist, automatisch in jeder Iteration konfigurierbare Einstellungen in der Thunfischkonservenmaschine (2) basierend auf den in jeder Iteration empfangenen optimalen Betriebsparametern (9) anzuwenden.

8. System nach einem der Ansprüche 1 bis 5, wobei die Kontrolleinheit (10) für Folgendes konfiguriert ist:

- Empfangen der optimalen Betriebsparameter (9) für die neue Produktion; und
- automatisches Anwenden konfigurierbarer Einstellungen auf die Thunfischkonservenmaschine (2) basierend auf den optimalen Betriebsparametern (9).

9. System nach einem der vorhergehenden Ansprüche, wobei die Zielfunktion (13) das Maximieren der Anzahl der Dosen einschließt, die pro Masseneinheit des eingegebenen Thunfischs hergestellt werden.

10. System nach einem der vorhergehenden Ansprüche, wobei die Optimierungseinheit (3) dazu konfiguriert ist, die optimalen Betriebsparameter (9) durch überwachtes maschinelles Lernen zu berechnen, das eine Trainingsstufe unter Verwendung historischer Produktionsdaten (5) einschließt.

11. Adaptives Thunfischkonservenverfahren, umfassend:

- Sammeln (110) einer Produktionsdatengeschichte (5), die durch eine Vielzahl von vergangenen Produktionsdaten (6) gebildet wird, die durch mindestens eine Trainings-Thunfischkonservenmaschine (7) während des Thunfischkonservenvorgangs in unterschiedlichen vergangenen Produktionen erfasst wurden;
- Empfangen (120) von Eingangsparametern (8) aus einer neuen Produktion einer Thunfischkonservenmaschine (2);
- Etablieren (130) einer Zielfunktion (13) für die neue Produktion der Thunfischkonservenmaschine (2);
- Berechnen (140) von optimalen Betriebsparametern (9) der Thunfischkonservenmaschine (2) für die neue Produktion aus der Produktionsdatengeschichte (5) durch Optimieren der Zielfunktion (13);
- Konfigurieren (150) der Thunfischkonservenmaschine (2) basierend auf den optimalen Betriebsparametern (9); und
- Durchführen (160) des Eindosens von Thunfisch in der neuen Produktion der Thunfischkonservenmaschine (2).

**12.** Verfahren nach Anspruch 11, umfassend das Messen (170) einer oder mehrerer Thunfischeigenschaften (12) während des Konservenvorgangs in der Thunfischkonservenmaschine (2); und wobei die Eingangsparameter (8) der neuen Produktion die Eigenschaften des gemessenen Thunfischs (12) umfassen.

**13.** Verfahren nach Anspruch 12, wobei die während des Konservenvorgangs gemessenen Thunfischeigenschaften (12) die Thunfischtemperatur umfassen.

**14.** Verfahren nach einem der Ansprüche 12 bis 13, wobei die während des Konservenvorgangs gemessenen Thunfischeigenschaften (12) mindestens eine der folgenden Thunfische umfassen: Feuchtigkeit, Protein-, Fett- und Aschegehalt des Thunfischs.

**15.** Verfahren nach einem der Ansprüche 12 bis 14, umfassend:

- Empfangen, wiederholt während der neuen Produktion, einiger Eingangsparameter (8) der neuen Produktion, die eine oder mehrere Eigenschaften des Thunfischs (12) einschließen, die bei jeder neuen Iteration gemessen werden;
- Berechnen von optimalen Betriebsparametern (9) für jede Iteration; und
- Anwenden konfigurierbarer Einstellungen in der Thunfischkonservenmaschine (2) basierend auf den in jeder Iteration berechneten optimalen Betriebsparametern.

## Revendications

**1.** Un système adaptatif de mise en conserve du thon, comprenant :

une machine de mise en conserve (2) comprenant une unité de contrôle (10) chargée de controller la machine pendant le processus de mise en conserve d'une production ; et
une unité d'optimisation (3) comprenant une unité de traitement des données (4) configurée pour :

recueillir un historique des données de production (5) formé par une pluralité de données de production antérieures (6) saisies par au moins une machine d'entraînement de mise en conserve du thon (7) au cours du processus de mise en conserve du thon dans différentes productions antérieures ;
recevoir les paramètres d'entrée (8) d'une nouvelle production de la machine de mise en conserve du thon (2) ;
établir une fonction cible (13) pour la nouvelle production de la machine de mise en conserve du thon (2) ; et
calculer, à partir de l'historique de données de production (5), les paramètres de fonctionnement optimaux (9) de la machine de mise en conserve du thon (2) pour la nouvelle production en optimisant la fonction cible (13) ;
et dans lequel la machine de mise en conserve du thon (2) est configurée pour effectuer la mise en conserve du thon dans la nouvelle production sur la base des paramètres de fonctionnement optimaux (9).

**2.** Système selon la revendication 1, dans lequel la machine de mise en conserve du thon (2) comprend au moins un capteur (11) configuré pour mesurer une ou plusieurs propriétés du thon (12) pendant le processus de mise en conserve ; et dans lequel les paramètres d'entrée (8) comprennent les propriétés du thon (12) mesurées par au moins un capteur (11).

**3.** Système selon la revendication 2, dans lequel au moins un capteur (11) comprend un capteur de température (22) configuré pour mesurer la température du thon.

**4.** Système selon l'une des revendications 2 à 3, dans lequel au moins un capteur (11) comprend un capteur NIR (23) configuré pour mesurer au moins une propriété du thon.

**5.** Système selon la revendication 4, dans lequel le capteur NIR (23) est configuré pour mesurer au moins l'une des propriétés suivantes du thon (12) : humidité, protéines, teneur en matières grasses et cendres de thon

**6.** Système selon l'une des revendications 2 à 5, dans lequel l'unité de commande (10) est configurée pour :

- envoyer à l'unité d'optimisation (3), à plusieurs reprises au cours de la nouvelle production, les paramètres d'entrée (8) de la nouvelle production, y compris une ou plusieurs propriétés du thon (12) mesurées par au moins un capteur (11) à chaque itération ; et
- recevoir, à chaque itération, les paramètres de fonctionnement optimaux (9) obtenus par l'unité d'optimisation (3).

7. Système selon la revendication 6, dans lequel l'unité de commande (10) est configurée pour appliquer, automatiquement à chaque itération, des réglages configurables dans la machine de mise en conserve du thon (2) sur la base des paramètres de fonctionnement optimaux (9) reçus à chaque itération.

8. Système selon l'une des revendications 1 à 5, dans lequel l'unité de commande (10) est configurée pour :

- recevoir les paramètres de fonctionnement optimaux (9) pour la nouvelle production ; et
- appliquer automatiquement des réglages configurables à la machine de mise en conserve du thon (2) sur la base de paramètres de fonctionnement optimaux (9).

9. Système selon l'une des revendications précédentes, dans lequel la fonction cible (13) comprend la maximisation du nombre de boîtes produites par unité de masse de thon d'entrée.

10. Système selon l'une des revendications précédentes, dans lequel l'unité d'optimisation (3) est configurée pour calculer les paramètres de fonctionnement optimaux (9) grâce à l'apprentissage automatique supervisé qui comprend une phase d'apprentissage à l'aide de données de production historiques (5).

11. Procédé adaptative de mise en conserve du thon, comprenant :

- la collecte (110) d'un historique des données de production (5) formé par une pluralité de données de production antérieures (6) saisies par au moins une machine d'entraînement de mise en conserve du thon (7) au cours du processus de mise en conserve du thon dans différentes productions antérieures ;
- recevoir les paramètres d'entrée (8) d'une nouvelle production de la machine de mise en conserve du thon (2) ;
- établir une fonction cible (13) pour la nouvelle production de la machine de mise en conserve du thon (2) ;
- calculer (140), à partir de l'historique des données de production (5), les paramètres de fonctionnement optimaux (9) de la machine de mise en conserve du thon (2) pour la nouvelle production en optimisant la fonction cible (13) ;
- configurer (150) la machine de mise en conserve du thon (2) sur la base des paramètres de fonctionnement optimaux (9) ; et
- exécuter (160) la mise en conserve du thon dans la nouvelle production de la machine de mise en conserve du thon (2).

12. Procédé selon la revendication 11, comprenant la mesure (170) d'une ou plusieurs propriétés du thon (12) pendant le processus de mise en conserve dans la machine de mise en conserve du thon (2) ; et dans laquelle les paramètres d'entrée (8) de la nouvelle production comprennent les propriétés du thon mesuré (12).

13. Procédé selon la revendication 12, dans lequel les propriétés du thon (12) mesurées pendant le processus de mise en conserve comprennent la température du thon.

14. Procédé selon l'une des revendications 12 à 13, dans lequel les propriétés du thon (12) mesurées au cours du processus de mise en conserve comprennent au moins l'une des caractéristiques suivantes du thon : humidité, protéines, matières grasses et teneur en cendres du thon.

15. Procédé de transfert selon l'une des revendications 12 à 14, comprenant

- recevoir, à plusieurs reprises au cours de la nouvelle production, certains paramètres d'entrée (8) de la nouvelle production, y compris une ou plusieurs propriétés du thon (12) mesurées à chaque répétition ;
- calculer, pour chaque itération, les paramètres de fonctionnement optimaux (9) ; et
- appliquer des paramètres configurables dans la machine de mise en conserve du thon (2) sur la base des paramètres de fonctionnement optimaux calculés à chaque itération.

TRAINING TUNA CANNING MACHINES

7

7

7

Past production data 6

Production data history 5

DATA PROCESSING UNIT 4

OPTIMIZATION UNIT 3

New production input parameters 8

Optimal operating parameters 9

TUNA CANNING MACHINE 2

CONTROL UNIT 10

DISPLAY 14

SENSOR 11

SENSOR 11

12

12

1

FIG. 1

FIG. 2

FIG. 3

EP 4 266 137 B1

| + stand. deviation | ⇒ | + target packing weight | ⇒ | + average actual packaging weight |

$$\Downarrow$$

| + input weight | ⇐ | + average drained weight |

### FIG. 4A

| + stand. deviation | ⇒ | + target packing weight | ⇒ | + average actual packaging weight |

$$\Downarrow$$

| - Can no./input tuna kg | ⇐ | + average drained weight and + input weight |

### FIG. 4B

| - gain | ⇒ | + loss and/or - absorption | ⇒ | + target packing weight |

$$\Downarrow$$

| - Can no./input tuna kg | ⇐ | + input weight | ⇐ | + average actual packaging weight |

### FIG. 4C

FIG. 5

# Production parameters 51

FIG. 6

FIG. 7A

FIG. 7B

FIG. 8

FIG. 9

**108**

| Settings (automatic registration) | Settings (manual registration) |
|---|---|
| - Stepper: active-active, hitting frequency, height.<br>- Recipe: production, advance, torque, blowing and steam injection.<br>- Pusher pressure.<br>- Maximum compaction speed<br>- Acceleration and deceleration of servomotors and variators. | - Type of nozzle.<br>- Advance band heights and density control. |

**Intrinsic properties (manual registration)**
- Type of advance bands and density control.
- Type of lateral bands.
- Prechambers.

**Intrinsic properties (manual registration)**
- Machine type.

**110**

## MACHINE 106

**10**

### RAW MATERIAL 102

**Production - raw material (manual registration)**
- Type of tuna.
- Type of raw material.
- State of the raw material.
- Origin of tuna.

**Production - raw material (automatic registration)**
- Tuna weight input.
- Temperature.
- Humidity.
- Protein.
- Fat.
- Ashes.

### FINAL PRODUCT 104

**Production - final product (manual registration)**
- Can format.
- Type of packaging.
- Coverage liquid.
- Target drained weight.
- Relevance of the gain (%).
- Relevance of appearance (%).

**Production - final product (manual registration)**
- Target packing weight

☐ Prescribable parameters
▢ Non-prescribable parameters

**Plant Intelligence**
- Corrected progress.

**Production outputs (manual registration)**
- Drained weight.
- **Appearance.**

**KPIs, indicators - Descriptive analytics**
- OEE (Availability, Performance, Quality).
- Diminishment.
- Average filling weights.
- Standard deviation of filling weight.
- Number of cans produced.
- Number of working hours.
- Downtime due to alarms.
- Downtime for maintenance.
- Absorption.
- Gain.

- **Number of cans/kg of input tuna.**

**Cloud Intelligence - Optimal machine settings**
- Type of advance bands and density control.
- Type of lateral bands.
- Antechambers.
- Mouthpiece.
- Advance band heights and density control.
- Pusher: active / inactive, hitting frequency, height.
- Recipe: production, advance, torque, blow and steam injection
- Pusher pressure.
- Maximum speed of compaction.
- Acceleration and deceleration of servomotors and variators.

**Cloud intelligence - Optimum filling weight**
- Optimum target packing weight.

## FIG. 10

EP 4 266 137 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- ES 2119608 B1
- ES 2351318 B1

- EP 2204324 A1

### Non-patent literature cited in the description

- **FARAG et al.** Optimal portion control of natural objects with application in automated cannery processing of fish. *Journal of Food Engineering,* 06 June 2000, vol. 46 (1), 31-41
- **DE SILVA et al.** Automation and optimization of the can-filling process of fish. *IFAC Proceedings,* 01 July 1998, vol. 31 (20), 337-342

- **ORTIZ-BARRIOS MIGUEL et al.** Using Statistical Experimental Design and RSM to Improve the Canning Process: A Case Study in the Fish Industry. *International Journal of Control Theory and Applications,* 31 December 2016, vol. 9 (44), 151-159